# EUROPÄISCHE PATENTANMELDUNG

(11) **EP 4 725 771 A1**
(43) Veröffentlichungstag der Anmeldung: **15.04.2026**
(21) Anmeldenummer: 25204488.8
(22) Anmeldetag: 25.09.2025
(51) Int. Cl.: B60R 16/02

(54) **TRÄGERTEIL FÜR EIN FAHRZEUG ZUR BEFESTIGUNG UND/ODER VERSTEIFUNG EINES AUSSENVERKLEIDUNGSTEILS**

(30) Priorität: 08.10.2024 DE 202024105800 U
(71) Anmelder: RESRG Automotive SE & Co. KG, 95111 Rehau (DE)
(72) Erfinder: Uhlig, Nico, 08468 Reichenbach (DE)

(57) **Zusammenfassung**

Die Erfindung betrifft ein Trägerteil (1) aus einem polymeren Werkstoff für ein Fahrzeug zur Befestigung und/oder Versteifung eines Außenverkleidungsteils (11), wobei an dem Trägerteil (1) ein Klemmhaken (2) ausgebildet ist, der über einen Fußabschnitt (3) einstückig mit dem Trägerteil (1) verbunden ist, wobei der Klemmhaken (2) zusammen mit dem Trägerteil (1) einen Fixierungsraum (4) zur Aufnahme und Befestigung wenigstens eines Leitungselementes (5) bildet, wobei der Klemmhaken (2) federnd auslenkbar ausgebildet ist, um für das Leitungselement (5) einen Zugang (6) zu dem Fixierungsraum (4) freigeben zu können, wobei das Trägerteil (1) im Bereich des Fußabschnitts (3) mehrere Aussparungen (7) aufweist, die einen elastisch federnden Blattfederabschnitt (8) innerhalb des Trägerteils (1) definieren, wobei der Fußabschnitt (3) auf dem Blattfederabschnitt (8) angeordnet ist.

## Beschreibung

Die vorliegende Erfindung betrifft ein Trägerteil aus einem polymeren Werkstoff für ein Fahrzeug zur Befestigung und/oder Versteifung eines Außenverkleidungsteils, wobei an dem Trägerteil ein Klemmhaken ausgebildet ist, der über einen Fußabschnitt einstückig mit dem Trägerteil verbunden ist, wobei der Klemmhaken zusammen mit dem Trägerteil einen Fixierungsraum zur Aufnahme und Befestigung wenigstens eines Leitungselementes bildet, wobei der Klemmhaken federnd auslenkbar ausgebildet ist, um für das Leitungselement einen Zugang zu dem Fixierungsraum freigeben zu können.

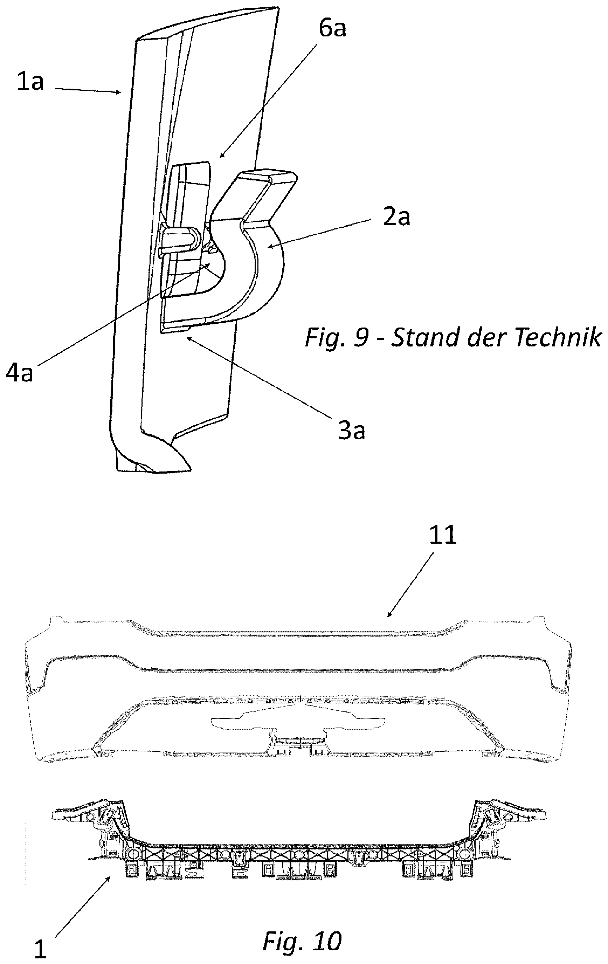

Ein derartiges Trägerteil ist in der Fig. 9 dargestellt und aus der Baureihe W206 (C-Klasse) der Mercedes-Benz Group AG seit dem Jahr 2021 vorbekannt.

Nachteilig an einem Klemmhaken eines Trägerteils gemäß diesem Stand der Technik ist, dass eine federnde Auslenkbarkeit nur bei relativ weichen polymeren Werkstoffen, wie beispielsweise Polypropylen, möglich ist. Wird ein steiferes Polymermaterial gewählt kann es im Fußabschnitt zu sogenannten Weißbrüchen kommen. Ein steiferes Polymermaterial, wie beispielsweise ein Polycarbonat-Compound, ist jedoch wünschenswerter, da dieses für die Funktion der Befestigung und/oder Versteifung des Außenverkleidungsteils deutlich besser geeignet ist. Aufgabe der vorliegenden Erfindung ist es daher ein Trägerteil anzugeben, das gleichzeitig die Anforderungen hinsichtlich der Auslenkbarkeit des Klemmhakens und der Versteifung des Außenverkleidungsteils erfüllt, unabhängig von den Eigenschaften des polymeren Werkstoffes des Trägerteils.

Diese Aufgabe wird vorliegend gelöst durch ein Trägerteil aus einem polymeren Werkstoff für ein Fahrzeug zur Befestigung und/oder Versteifung eines Außenverkleidungsteils, wobei an dem Trägerteil ein Klemmhaken ausgebildet ist, der über einen Fußabschnitt einstückig mit dem Trägerteil verbunden ist, wobei der Klemmhaken zusammen mit dem Trägerteil einen Fixierungsraum zur Aufnahme und Befestigung wenigstens eines Leitungselementes bildet, wobei der Klemmhaken federnd auslenkbar ausgebildet ist, um für das Leitungselement einen Zugang zu dem Fixierungsraum freigeben zu können, wobei das Trägerteil im Bereich des Fußabschnitts mehrere Aussparungen aufweist, die einen elastisch federnden Blattfederabschnitt innerhalb des Trägerteils definieren, wobei der Fußabschnitt auf dem Blattfederabschnitt angeordnet ist.

Durch die Anordnung des Klemmhakens auf einem in dem Trägerteil ausgebildeten Blattfederabschnitt, erfolgt das federnde Auslenken des Klemmhakens wesentlich weniger belastend für den polymeren Werkstoff des Trägerteils. Gleichzeitig wird zudem die Montagekraft für das Leitungselement reduziert, was zusätzlich die Montagearbeit beim Zusammenbau von Trägerteil und Leitungselement erleichtert. Es kann insbesondere vorgesehen sein, dass das Trägerteil in einem Spritzgussverfahren einstückig ausgebildet ist. Die Aussparungen in dem Trägerteil sind dann bereits nach dem Spritzgießen des Trägerteils fertig ausgebildet, könnten alternativ nachträglich, beispielsweise durch einen Stanz- oder Schneidvorgang, eingebracht sein.

Es kann vorgesehen sein, dass wenigstens drei Aussparungen vorgesehen sind, die den Blattfederabschnitt von dem restlichen Trägerteil abteilen.

Es kann vorgesehen sein, dass innerhalb des Blattfederabschnitts wenigstens eine weitere Aussparung vorgesehen ist. Die wenigstens eine weitere Aussparung ermöglicht es die Federsteifigkeit des Blattfederabschnitts zu variieren, je nach Größe und Anzahl der weiteren Aussparung/en.

Es kann vorgesehen sein, dass der dem Fußabschnitt gegenüberliegende Bereich des Klemmhakens eine Einführschräge für das Leitungselement aufweist.

Es kann vorgesehen sein, dass an dem Trägerteil zusätzlich wenigstens eine, über den Fixierungsraum des Klemmhakens ragende, Verliersicherung ausgebildet ist. Die zusätzliche Verliersicherung dient zum einen der Verringerung des Risikos, dass sich ein in dem Fixierungsraum aufgenommenes Leitungselement aus dem Klemmhaken löst. Zum anderen können hierdurch kleinere Leitungselementdurchmesser als ohne eine derartige Verliersicherung genutzt oder aufgenommen werden.

Es kann vorgesehen sein, dass die Verliersicherung als eine von dem Trägerteil abstehende Zunge ausgebildet ist.

Es kann vorgesehen sein, dass das Trägerteil aus einem thermoplastischen Werkstoff gebildet ist.

Es kann vorgesehen sein, dass der thermoplastische Werkstoff Acrylester-Styrol-Acrylnitril (ASA), Polysulfon (PSU), Poly(ethersulfon) (PES), Polyetherimid (PEI), Poly(phenylensulfid) (PPS), Polyphenylen-sulfon (PPSU), Polyetheretherketon (PEEK), Polyetherketone (PEK), Polyamidimid (PAI), Poly-m-phenylenisophthalamid (PMI), Polyphthalamide (PPA), Polybenzimidazole (PBI), Polytetrafluorethylen (PTFE), Perfluoralkoxylalkan (PFA), Polyoxymethylen (POM), Polyamid (PA), Polyethylenterephthalat (PET), Polybutylenterephtalat (PBT), Polymethylmethacrylat (PMMA), Polystyrol (PS), Syndiotaktisches Polystyrol (sPS), Polycarbonat (PC), Styrol-Acrylnitril-Copolymer (SAN), Polyphenylenether (PPE), Ethy-len-Propylen-Dien-Kautschuk (EPDM), Acrylnitril-Butadien-Styrol (ABS), Polylactat (PLA), Polyethylen (PE), Polypropylen (PP), Polyvinylchlorid (PVC) oder Mischungen der vorgenannten Materialen umfasst.

Es kann vorgesehen sein, dass in dem Fixierungsraum des Trägerteils ein Leitungselement aufgenommen ist, wobei das Leitungselement ein Elektrokabel oder eine Sensorleitung oder einen Druckschlauch oder eine Fluidleitung umfasst oder ein Elektrokabel oder eine Sensorleitung oder ein Druckschlauch oder eine Fluidleitung ist.

Es kann vorgesehen sein, dass das Trägerteil eine Wanddicke im Bereich zwischen 2,0 mm bis 4,5 mm aufweist.

Teil der Erfindung ist ferner eine Baugruppe bestehend aus einem vorstehend beschriebenen Trägerteil für ein Fahrzeug und einem mit dem Trägerteil verbundenen Außenverkleidungsteil, wobei das Außenverkleidungsteil ein Kühlerschutzgitter oder eine Frontmaske oder eine Stoßfängerverkleidung oder eine Spoileraußenhaut oder eine Schwellerverkleidung oder eine Kotflügelverkleidung ist.

Eine Frontmaske ist derjenige Teil eines Fahrzeugs an deren Stelle sich bei Verbrennungsfahrzeugen der Kühlergrill befunden hat. Insbesondere bei Elektrofahrzeugen ist diese Frontmaske nicht mehr als Lufteinlass zu dem Kühler (den es hier nicht mehr gibt) ausgebildet, sondern als Designelement in der Fahrzeugmitte vorgesehen.

### Ausführungsbeispiele

Im Folgenden wird die Erfindung anhand lediglich ein Ausführungsbeispiel darstellender Zeichnungen erläutert. Es zeigen schematisch:
- Fig. 1 bis 8: verschiedene Ansichten eines erfindungsgemäßen Trägerteils;
- Fig. 9: ein aus dem Stand der Technik vorbekanntes Trägerteil;
- Fig. 10: eine Baugruppe aus einem Trägerteil und einer Stoßfängerverkleidung im nicht-verbundenen Zustand.

In den Figuren werden gleiche oder funktionsgleiche Elemente mit den gleichen Bezugszeichen versehen.

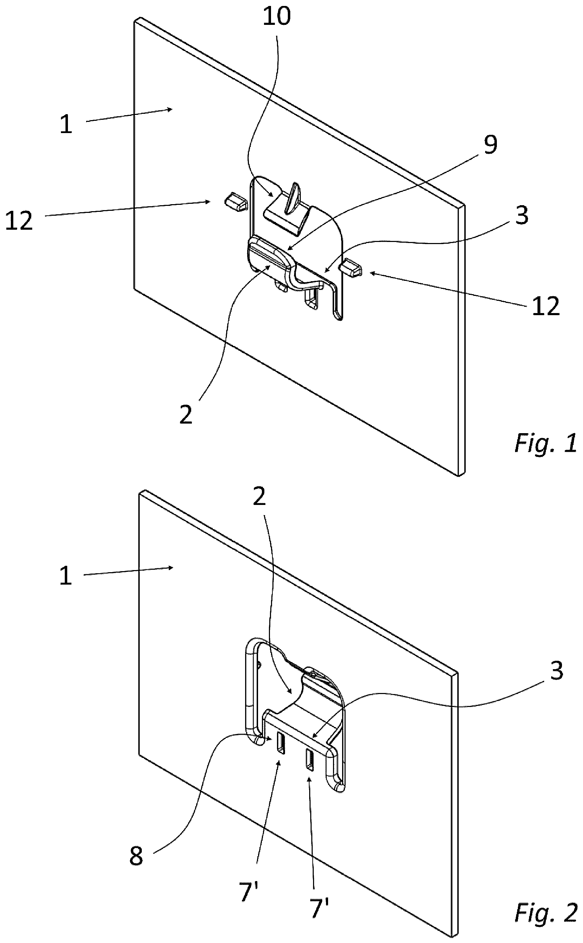

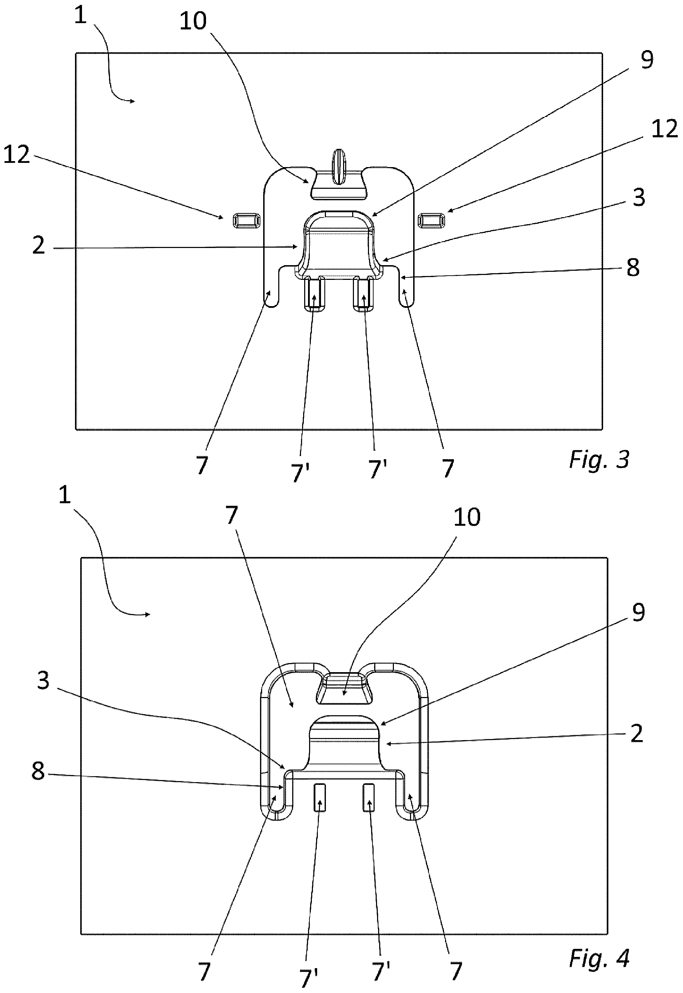

In der Fig. 9 ist ein Trägerteil aus dem Stand der Technik dargestellt aus der Baureihe W206 (C-Klasse) der Mercedes-Benz Group AG, wie es seit dem Jahr 2021 dort verbaut wurde. Das Trägerteil 1a aus einem polymeren Werkstoff für ein Fahrzeug dient zur Befestigung und/oder Versteifung eines Außenverkleidungsteils. An dem Trägerteil 1a ist ein Klemmhaken 2a ausgebildet, der über einen Fußabschnitt 3a einstückig mit dem Trägerteil 1a verbunden ist. Der Klemmhaken 2a bildet zusammen mit dem Trägerteil 1a einen Fixierungsraum 4a zur Aufnahme und Befestigung wenigstens eines Leitungselementes (hier nicht näher dargestellt). Der Klemmhaken 2a ist federnd auslenkbar ausgebildet, um für das Leitungselement einen Zugang 6a zu dem Fixierungsraum 4a freigeben zu können. Demgegenüber ist in den Fig. 1 bis 8 ein erfindungsgemäßes Trägerteil 1 in verschiedenen Ansichten dargestellt. Das Trägerteil 1 aus einem polymeren Werkstoff für ein Fahrzeug dient zur Befestigung und/oder Versteifung eines Außenverkleidungsteils 11 (vgl. Fig. 10). An dem Trägerteil 1 ist ein Klemmhaken 2 ausgebildet, der über einen Fußabschnitt 3 (vgl. insbesondere Draufsicht in Fig. 3 und Rückansicht in Fig. 4) einstückig mit dem Trägerteil 1 verbunden ist.

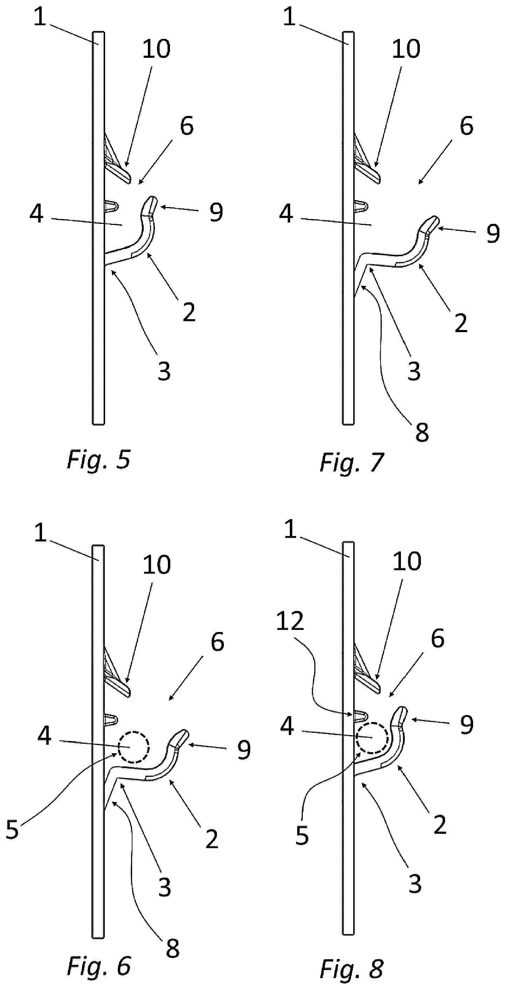

Der Klemmhaken 2 bildet zusammen mit dem Trägerteil 1 einen Fixierungsraum 4 zur Aufnahme und Befestigung wenigstens eines Leitungselementes 5 (vgl. Seitenansichten Fig. 5 und Fig. 8). Der Klemmhaken 2 ist federnd auslenkbar ausgebildet, um für das Leitungselement 5 einen Zugang 6 zu dem Fixierungsraum 4 freigeben zu können (vgl. Seitenansichten Fig. 7 und Fig. 8).

Das Trägerteil 1 weist im Bereich des Fußabschnitts 3 mehrere Aussparungen 7 auf, die einen elastisch federnden Blattfederabschnitt 8 innerhalb des Trägerteils 1 definieren, wobei der Fußabschnitt 3 auf dem Blattfederabschnitt 8 angeordnet ist (vgl. insbesondere Ansichten in den Fig. 3, 4 und 7).

Es sind drei Aussparungen 7 vorgesehen, die den Blattfederabschnitt 8 von dem restlichen Trägerteil 1 abteilen (vgl. insbesondere Fig. 3 und 4).

Zusätzlich sind neben dem Klemmhaken 2 zwei Anschläge 12 vorgesehen, die das Leitungselement 5 zusätzlich fixieren (vgl. Fig. 8 und Fig. 1 bis Fig. 3).

Darüber hinaus sind innerhalb des Blattfederabschnitts 8 zwei weitere Aussparungen 7' vorgesehen.

Der dem Fußabschnitt 3 gegenüberliegende Bereich 9 des Klemmhakens 2 weist eine Einführschräge für das Leitungselement 5 auf (vgl. beispielsweise Seitenansicht 5).

An dem Trägerteil 1 ist zusätzlich wenigstens eine, über den Fixierungsraum 4 des Klemmhakens 2 ragende, Verliersicherung 10 ausgebildet (vgl. perspektivische Ansicht der Draufsicht in Fig. 1 und Seitenansicht in Fig. 5). Die Verliersicherung 10 ist als eine von dem Trägerteil 1 abstehende Zunge ausgebildet.

Das Trägerteil 1 ist aus einem thermoplastischen Werkstoff gebildet. Vorliegend ist das Trägerteil 1 einstückig aus einem thermoplastischen Werkstoff der Acrylester-Styrol-Acrylnitril (ASA) und Polycarbonat (PC) oder Acrylnitril-Butadien-Styrol (ABS) und Polycarbonat (PC) umfasst hergestellt.

**In** der Seitenansicht gemäß Fig. 8 ist ein Trägerteil dargestellt mit einem in dem Fixierungsraum 4 des Trägerteils 1 aufgenommenen Leitungselement 5, wobei das Leitungselement 5 ein Elektrokabel oder eine Sensorleitung oder einen Druckschlauch oder eine Fluidleitung umfasst oder ist.

In der Fig. 10 ist eine Baugruppe dargestellt, bestehend aus einem Trägerteil 1 für ein Fahrzeug wie vorstehend beschrieben und einem mit dem Trägerteil 1 (noch nicht) verbundenen Außenverkleidungsteil 11, wobei das Außenverkleidungsteil 11 eine Stoßfängerverkleidung ist.

## Patentansprüche

1. Trägerteil (1) aus einem polymeren Werkstoff für ein Fahrzeug zur Befestigung und/oder Versteifung eines Außenverkleidungsteils (11),
wobei an dem Trägerteil (1) ein Klemmhaken (2) ausgebildet ist, der über einen Fußabschnitt (3) einstückig mit dem Trägerteil (1) verbunden ist,
wobei der Klemmhaken (2) zusammen mit dem Trägerteil (1) einen Fixierungsraum (4) zur Aufnahme und Befestigung wenigstens eines Leitungselementes (5) bildet,
wobei der Klemmhaken (2) federnd auslenkbar ausgebildet ist, um für das Leitungselement (5) einen Zugang (6) zu dem Fixierungsraum (4) freigeben zu können,
**dadurch gekennzeichnet, dass**
das Trägerteil (1) im Bereich des Fußabschnitts (3) mehrere Aussparungen (7) aufweist, die einen elastisch federnden Blattfederabschnitt (8) innerhalb des Trägerteils (1) definieren, wobei der Fußabschnitt (3) auf dem Blattfederabschnitt (8) angeordnet ist.

2. Trägerteil (1) nach Anspruch 1, **dadurch gekennzeichnet, dass** wenigstens drei Aussparungen (7) vorgesehen sind, die den Blattfederabschnitt (8) von dem restlichen Trägerteil (1) abteilen.

3. Trägerteil (1) nach Anspruch 1 oder 2, **dadurch gekennzeichnet, dass** innerhalb des Blattfederabschnitts (8) wenigstens eine weitere Aussparung (7') vorgesehen ist.

4. Trägerteil (1) nach einem der vorstehenden Ansprüche, **dadurch gekennzeichnet, dass** der dem Fußabschnitt (3) gegenüberliegende Bereich (9) des Klemmhakens (2) eine Einführschräge für das Leitungselement (5) aufweist.

5. Trägerteil (1) nach einem der vorstehenden Ansprüche, **dadurch gekennzeichnet, dass** an dem Trägerteil (1) zusätzlich wenigstens eine, über den Fixierungsraum (4) des Klemmhakens (2) ragende, Verliersicherung (10) ausgebildet ist.

6. Trägerteil (1) nach Anspruch 5, **dadurch gekennzeichnet, dass** die Verliersicherung (10) als eine von dem Trägerteil (1) abstehende Zunge ausgebildet ist.

7. Trägerteil (1) nach einem der vorstehenden Ansprüche, **dadurch gekennzeichnet, dass** das Trägerteil (1) aus einem thermoplastischen Werkstoff gebildet ist.

8. Trägerteil (1) nach Anspruch 7, **dadurch gekennzeichnet, dass** der thermoplastische Werkstoff Acrylester-Styrol-Acrylnitril (ASA), Polysulfon (PSU), Poly(ethersulfon) (PES), Polyetherimid (PEI), Poly(phenylensulfid) (PPS), Polyphenylensulfon (PPSU), Polyetheretherketon (PEEK), Polyetherketone (PEK), Polyamidimid (PAI), Poly-m-phenylenisophthalamid (PMI), Polyphthalamide (PPA), Polybenzimidazole (PBI), Polytetrafluorethylen (PTFE), Perfluoralkoxylalkan (PFA), Polyoxymethylen (POM), Polyamid (PA), Polyethylenterephthalat (PET), Polybutylenterephtalat (PBT), Polymethylmethacrylat (PMMA), Polystyrol (PS), Syndiotaktisches Polystyrol (sPS), Polycarbonat (PC), Styrol-Acrylnitril-Copolymer (SAN), Polyphenylenether (PPE), Ethylen-Propylen-Dien-Kautschuk (EPDM), Acrylnitril-Butadien-Styrol (ABS), Polylactat (PLA), Polyethylen (PE), Polypropylen (PP), Polyvinylchlorid (PVC) oder Mischungen der vorgenannten Materialen umfasst.

9. Trägerteil (1) nach einem der vorstehenden Ansprüche, **dadurch gekennzeichnet, dass** in dem Fixierungsraum (4) des Trägerteils (1) ein Leitungselement (5) aufgenommen ist, wobei das Leitungselement (5) ein Elektrokabel oder eine Sensorleitung oder einen Druckschlauch oder eine Fluidleitung umfasst oder ist.

10. Baugruppe bestehend aus einem Trägerteil (1) für ein Fahrzeug nach einem der vorstehenden Ansprüche und einem mit dem Trägerteil (1) verbundenen Außenverkleidungsteil (11), wobei das Außenverkleidungsteil (11) ein Kühlerschutzgitter oder eine Frontmaske oder eine Stoßfängerverkleidung oder eine Spoileraußenhaut oder eine Schwellerverkleidung oder eine Kotflügelverkleidung ist.
